# EUROPEAN PATENT APPLICATION

(11) **EP 3 406 525 A1**
(43) Date of publication of application: **28.11.2018**
(21) Application number: 18170237.4
(22) Date of filing: 01.05.2018
(51) Int. Cl.: B64D 27/02, F02C 3/04, H02K 5/124, H02K 49/10

(54) **PREVENTING ELECTRICAL BREAKDOWN**

(30) Priority: 24.05.2017 GB 201708289
(71) Applicant: Rolls-Royce plc, London SW1E 6AT (GB)
(72) Inventor: Razak, Ahmed, Derby, Derbyshire DE24 8BJ (GB); Chong, Ellis, Derby, Derbyshire DE24 8BJ (GB)
(74) Representative: Rolls-Royce plc

(57) **Abstract**

A propulsor (101) for an aircraft is shown. The propulsor comprises a propulsive fan (106), and an electric machine (108) configured to drive the propulsive fan. The electric machine has a casing containing electrical and electromechanical components, a shaft which extends outside of the casing and which is connected to the propulsive fan, and a seal to seal the casing around the shaft. A pressurisation system pressurises the casing above an external pressure to prevent electrical breakdown within gas in the casing of the electric machine.

## Description

### TECHNICAL FIELD

This disclosure relates to the prevention of electrical breakdown in electric machines in aircraft propulsors.

### BACKGROUND

At sea level, the dielectric strength of air is typically in the region of megavolts. However, in regions of low air pressure, such as experienced by aircraft at cruise altitude, the dielectric strength may drop to the order of only hundreds of volts.

Electric machines (a term which will be appreciated encompasses electric motors, electric generators and other electromagnetic machines and combinations thereof) are typically subjected to voltage derating as altitude increases to prevent the likelihood of electrical breakdown and the attendant phenomena such as arcing and corona, which may cause catastrophic failure modes.

Aircraft propulsion systems that use electric machines to drive a propulsive fan have been proposed. However, due to the thrust demand placed upon the propulsion system and the necessarily high voltage requirement of the electric machines in such applications, it may not be possible to circumvent the issue of electrical breakdown by simply moving to a voltage regime which will not exceed the breakdown voltage.

Measures to mitigate the risk of electrical breakdown in electric machines are therefore required.

### SUMMARY

The invention is directed towards a propulsor for an aircraft, and an aircraft comprising the same.

The propulsor comprises a propulsive fan and an electric machine configured to drive it. The electric machine comprises a casing containing electrical and electromechanical components, a shaft which extends outside of the casing and which is connected to the propulsive fan, and a seal to seal the casing around the shaft, and a pressurisation system configured to pressurise the casing above an external gas pressure to prevent electrical breakdown within the gas the casing, wherein an inlet of the dry gas seal is connected with the pressurisation system to receive pressurised gas therefrom.

In this way, the components liable to be damaged by electrical breakdown phenomena such as arcing and corona are sealed in a casing pressurised by the pressurisation system, and work may be performed by the electric machine upon the fan via its shaft.

The electric machine may during use operate as an electric motor or an electric generator, and may operate using alternating or direct current.

In use, the pressurisation system will operate to raise the pressure inside the casing of the electric machine above the external gas pressure. Given typical cruise altitudes, the external gas pressure will be low and thus the breakdown voltage will also be low. This may lead to electrical breakdown events. An increase in the gas pressure within the casing, however, results in a smaller mean free path between molecules within the gas within the casing, thereby increasing the likelihood of collisions. Due to the greater number of collisions, free electrons are not able to accelerate to the same degree in the electric field, and therefore do not acquire as much energy prior to a collision. This therefore increases the voltage required for electron avalanche initiation to a point greater than the peak operational voltage within the casing, thereby preventing electrical breakdown.

In an embodiment, the propulsor forms part of the aircraft.

Depending upon the installation, the pressurisation system for the electric machine in the propulsor may receive input gas from various sources. Pressurised air generated by the propulsive fan may be used. Alternatively, or in addition, if the propulsor is installed on an aircraft comprising a hybrid propulsion system, it may receive pressurised air from a bleed air system of a gas turbine engine. In such an example, the pressurisation system may form part of a broader engine control strategy for increasing the surge margin of the gas turbine engine by controlling the degree of take-off air from the compressor stages. Alternatively, or in addition, the pressurisation system may receive input gas from a cabin air exhaust of the aircraft. A degree of cabin air is typically vented directly to atmosphere and thus its use as the input for the pressurisation system may reduce any parasitic losses of the system. Alternatively, input gas may be sourced from a dedicated supply, in situations where it is desirable to utilise another gas other than air, such as those having greater dielectric strength.

### BRIEF DESCRIPTION OF THE DRAWINGS

Embodiments will now be described by way of example only with reference to the accompanying drawings, which are purely schematic and not to scale, and in which:
Figure 1 shows a propulsor for an aircraft;
Figure 2 shows a block diagram of an electric machine according to the present invention;
Figure 3 shows a first embodiment of the electric machine of Figure 2;
Figure 4 shows one way of implementing the electric machine of Figure 3;
Figure 5 shows another way of implementing the electric machine of Figure 3;
Figure 6 shows a second embodiment of the electric machine of Figure 2; and
Figure 7 shows a way of implementing the electric machine of Figure 6.

### DETAILED DESCRIPTION

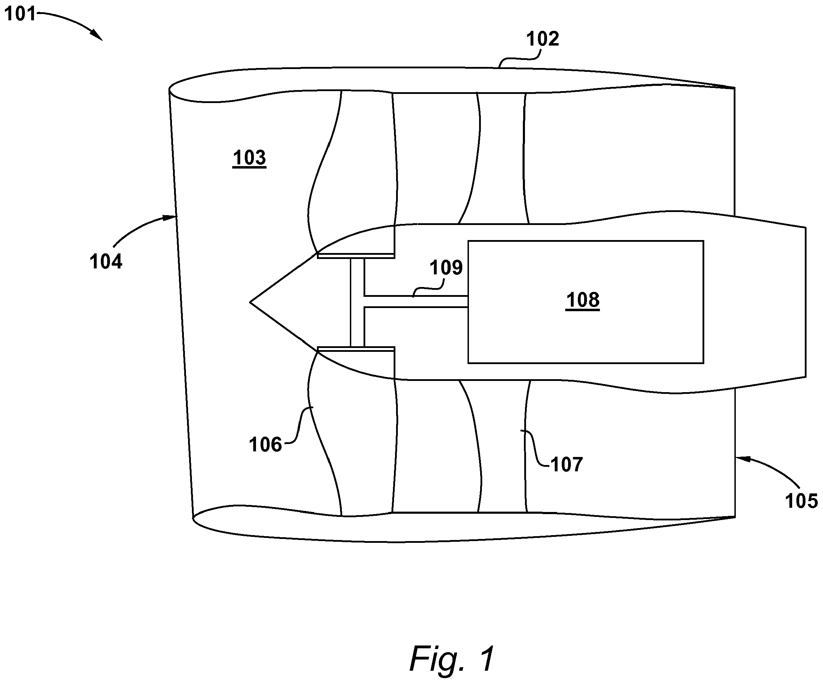

An electric propulsor 101 is shown in Figure 1. In the present embodiment, the electric propulsor 101 is configured as a ducted fan, and thus comprises a nacelle 102 which defines a duct 103 having an inlet 104 and a nozzle 105, and in which a propulsive fan 106 is located. In operation, the fan 106 raises the pressure of intake air, with swirl in the airflow being removed by outlet guide vanes 107. The airflow is directed through the nozzle 105 to generate thrust.

In the embodiment of Figure 1, the fan 106 is driven directly by an electric machine, shown generally at 108, via a fan shaft 109.

In an alternative embodiment, the propulsor 101 may be configured as a propfan, also known as an open rotor propulsor. A gearbox or another electric machine may be provided should the propfan be of the contra-rotating type and thus comprise an additional propulsive fan.

In another alternative embodiment, the propulsor 101 may also be of the turboelectric type, which is to say that the propulsor has a series or parallel hybrid architecture in which the propulsive fan 106 is driven by a combination of an electric machine and a gas turbine engine, for example.

In the present example, the diameter of the fan is at least 1 metre. It may additionally or alternatively be at least 2 meters in diameter. The maximum tip pressure ratio of the propulsive fan 106 during use may be at most 1.5. Said use is in the present example the aerodynamic design point, which may be cruise conditions, i.e. 0.85 Mach at 35,000 feet altitude. In an alternative embodiment, the maximum tip pressure ratio of the propulsive fan 106 during use may be at most 1.3.

In an embodiment, the maximum tip speed of the propulsive fan 106 during use may be less than 343 metres per second. In this case, said use is at maximum take-off conditions. Such a tip speed may assist in reducing noise pollution at airports.

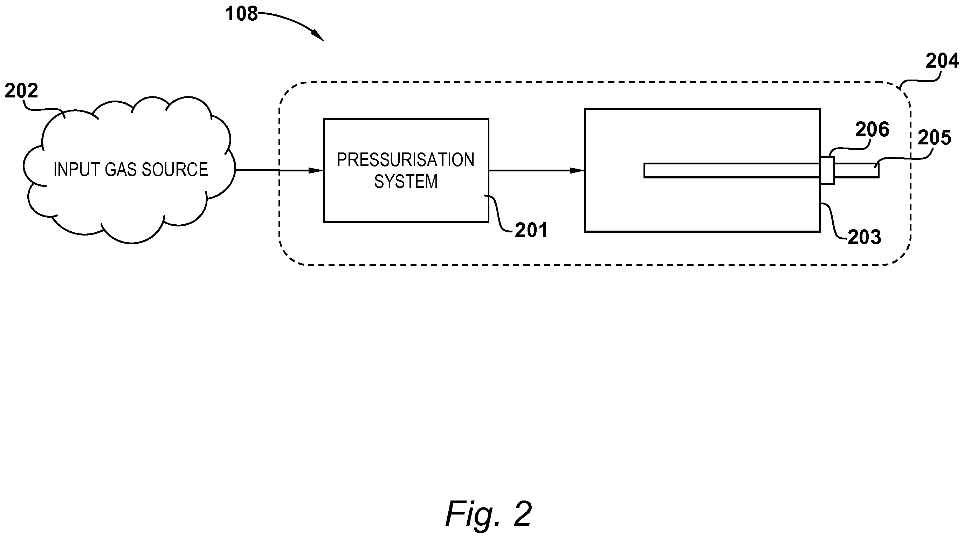

A block diagram of the electric machine 108 is shown in Figure 2. The electric machine 108 comprises a pressurisation system 201 which receives a supply of input gas from an input gas source 202. The input gas source 202 could be the atmosphere, such as via the intake 103 of the electric propulsor 101, or could be a source of pre-pressurised gas such as the duct 103 of the electric propulsor 101 downstream of the fan 103, or a cabin air exhaust of an aircraft to which the propulsor 101 is affixed. Alternatively, the supply of input gas could be dedicated and thus supply a specific gas with higher dielectric strength relative to air, such as pure nitrogen, or sulphur hexafluoride.

The pressurisation system 201 operates to pressurise a casing 203 of the electric machine 108 above an external pressure of the environment 204 in which the electric machine 108 is located. The gas within the casing, depending upon the input gas source 103, may be air, nitrogen, or sulphur hexafluoride, or any other suitable gas.

The casing 203 houses electrical and electromechanical components (not shown) which effect the conversion of electrical power into work upon an output shaft 205 (which in the present embodiment connects directly to the fan shaft 109), or vice versa depending upon the assigned role of the electric machine 108, for example whether it is to operate as a motor or generator. It will be appreciated that the exact configuration of the electrical and electromechanical components within the casing 203 will differ according to the type of the electric machine as implemented, and thus the term as used herein will be understood to include coils, magnets, brushes, springs, commutators, power electronics, etc.

As the shaft 205 extends outside of the casing, a seal 206 is provided to seal the casing around the shaft. Whilst the shaft 205 is shown extending out of only one end of the casing, it will be appreciated that the principles of the present invention may be extended to electric machines in which the shaft extends the full way through the casing, thus having what are commonly referred to as working and non-working ends. In such an implementation, another seal 206 would be provided to seal the casing around the two ends of the shaft.

In one embodiment the seal 206 comprises a labyrinth seal. Labyrinth seals are characterised by a series of annular orifices used to seal a region of high pressure from one of low pressure. When gas flows from the high pressure side to the low pressure side of the seal, turbulence is caused by each annulus of the seal. Whilst this serves to minimise leakage, it does not entirely prevent it. Thus, in this example, the pressurisation system 201 operates to maintain the pressure in the casing 203 despite any leakage across the labyrinth seal into the environment 204.

In an alternative embodiment the seal 206 comprises a dry gas seal. Such seals feature zones between the stationary face of the casing and rotating face of the shaft into which gas is pumped. When the pressure of gas in these zones exceeds the static pressure holding the faces together, the faces separate by a thin layer of gas. Dry gas seals are supplied gas at pressure via an inlet, and have an outlet for seal gas to be vented. As the zones are small, the pressure in them tends to be greater than that in the casing 203, and thus there is little leakage of gas from the casing 203 through the seal 206 in such an implementation.

It will of course be appreciated that any appropriate type of seal or combination of seals may be used to prevent substantial egress of air from the environment 104 into the casing 203.

It will be apparent that the degree of pressurisation required within the casing 203 is dependent upon, with respect to any two electrodes therein, the peak operational potential difference between them, and the distance between them. Paschen's law may therefore be used to obtain, given a peak operational voltage, the maximum permitted product of pressure and distance between electrodes to prevent electrical breakdown, and therefore arcing, corona, etc. In the present embodiment, the pressure in the casing is maintained at 100 kilopascals. As stated, however, the pressure may be different in other embodiments depending upon the factors that affect the initiation of electrical breakdown.

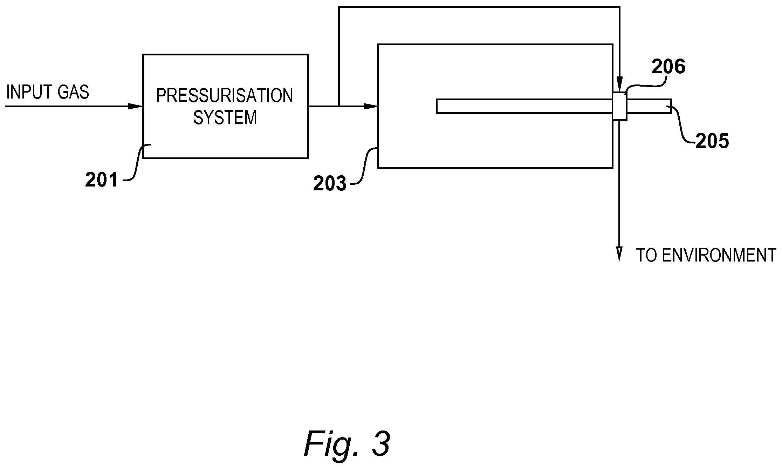

An embodiment of the electric machine 108 employing a dry gas seal is shown in schematic form in Figure 3.

In this example, the pressurisation system 201 receives input gas and pressurises the casing 203. The seal 206, which as discussed is a dry gas seal in the present example, also receives a supply of pressurised air. In this example, the seal 206 vents to atmosphere.

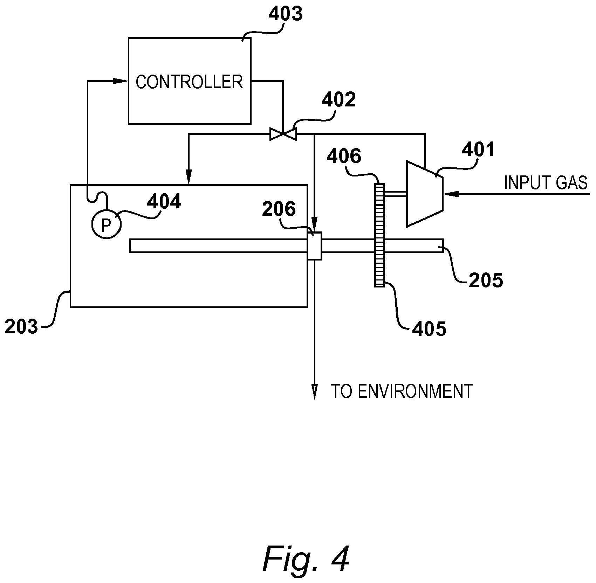

A practical approach to implementing the electric machine of Figure 3, is shown in Figure 4.

In this example, the pressurisation system 201 comprises a compressor 401 driven by the shaft 205. In the illustrated embodiment, the compressor is a single-stage centrifugal compressor, but could be an axial compressor and alternatively, or in addition, may be multi-stage.

In the embodiment shown in Figure 4, a pressure relief valve 402 is provided between the outlet of the compressor 401 and the casing 203 to allow the pressure in the casing 203 to be maintained at a level sufficient to prevent electrical breakdown.

Whilst a mechanical pressure relief valve may be used, in the present example a controller 403 and a pressure sensor 404 within the casing are provided. This may provide more accurate control, for example in terms of bandwidth. The pressure sensor 404 is configured to provide the controller 403 with a signal indicative of the pressure therein, which the controller 403 is configured to utilise to control the relief valve 402 by means of a solenoid (not shown).

In an example, the controller 403 is an analog controller configured to implement a prescribed control loop. Alternatively, the controller may be a digital controller with software-defined logic to achieve the desired control over the pressure in the casing 203. The controller in the latter case may form part of another sub-system in the wider installation the electric machine 108 forms part of, such as a FADEC in the propulsor 101.

The control loop in the present example operates to compare the current pressure within the casing 203 to a prescribed threshold, above which electrical breakdown may occur. If the current pressure is determined to be below the threshold, the relief valve 402 is closed. If the current pressure is determined to be above the threshold, the relief valve 402 is opened.

In a specific embodiment, a degree of hysteresis is included in the control loop to prevent over-actuation of the relief valve 402. In this way, the valve is only opened once the pressure in the casing 203 is above the threshold pressure, plus a lag value. As gas leaves the casing 203, the pressure will drop and approach the threshold, leading to the relief valve 402 being closed by the controller 403 to repressurise the casing 203.

In an alternative embodiment, the compressor 401 may be clutched to the shaft, with the controller 403 thereby being configured to determine, based upon the output of the pressure sensor 404, whether the pressure in the casing is above or below a threshold, which if not met could result in voltage breakdown and arcing. Following the determination, the controller 403 may either enable or disable the compressor 401 by operating the clutch.

Thus, in either embodiment, the controller 403 operates in response to the output of the pressure sensor 404 to either allow the compressor 401 to pressurise the casing 203, or prevent it from doing so.

The compressor 401 is, in the present example, geared to the shaft 205 in order to drive the compressor 401 at the requisite angular rate to pressurise the casing 203. In the present example, this is achieved by a combination of a gear 405 on the shaft 205 meshed with a pinion 406 to drive the compressor 401. It will be appreciated that the gear ratio will be in practice be dependent upon a combination of the angular rate required for the compressor 401, which will typically be in the 50000 to 70000 rpm range for example, and the operational rate of the electric machine 108. In a specific embodiment, the gear system used to connect the vacuum pump to the shaft is a magnetic gear.

In a further variation, the compressor 401 may be geared to the shaft using a variable transmission, possibly a variable magnetic gear, such that the compressor's speed and therefore pressure ratio may be varied by the controller 403 to maintain the pressure in the casing 203 at a fixed value or within an acceptable defined range.

Gearing may be omitted, of course, if the electric machine 108 is to operate at same angular rate as required by the compressor 401.

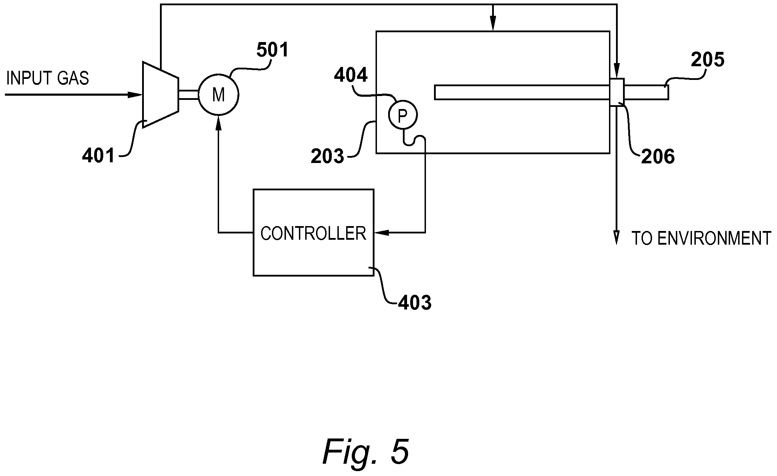

Another approach to implementing the electric machine of Figure 3 is illustrated in Figure 5.

In this example, the pressurisation system 201 comprises compressor 401, but in an electrically-driven configuration in which it is driven by a motor 501.

The motor 501 operates under the control of controller 403 which, in a similar way as described previously with reference to Figure 4, may either enable or disable it in response to the output of pressure sensor 404 in the casing 203. Alternatively, the controller 403 may vary the speed of the motor 501 so as to maintain the pressure in the casing 203 at a fixed value or within an acceptable range.

The motor 501 in this example operates at a much lower voltage than the electrical and electromechanical components in the casing 203. In this way, it is able to operate in low pressure environments such as at aircraft cruise altitude without experiencing electrical breakdown, whereas breakdown could occur between the components in the casing 203 without pressurisation due to the high voltages therein. Of course, it will be understood that the motor 501 could, in an alternative embodiment, be itself subjected to pressurisation should electrical breakdown be possible due to its specification and operating environment.

One benefit of using the arrangement shown in Figure 5 is that, prior to starting the electric machine 108, the casing 203 may be pressurised by the compressor 401 driven by the motor 501. This can be of particular advantage should the propulsor 101 form part of an on-demand system in an aircraft in which it would not be running constantly, such as in a distributed propulsion architecture.

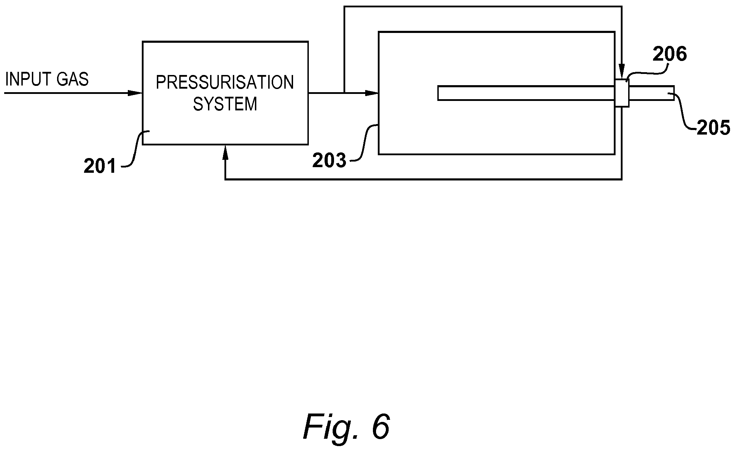

A further embodiment of the electric machine 108 employing a dry gas seal is shown in schematic form in Figure 6.

In this example, the pressurisation system 201 receives input gas and pressurises the casing 203. The seal 206, which as discussed is a dry gas seal in the present example, also receives a supply of pressurised air.

In this example, the seal 206 does not vent to atmosphere and instead directs the pressurised air from the seal 206 back to the pressurisation system 201 to enable a degree of energy recovery. It should be noted that the gas leaving the casing 203 via the seal 206 will be warmer than at the inlet to the casing 203, as it will have been heated by the electrical and electromechanical components therein.

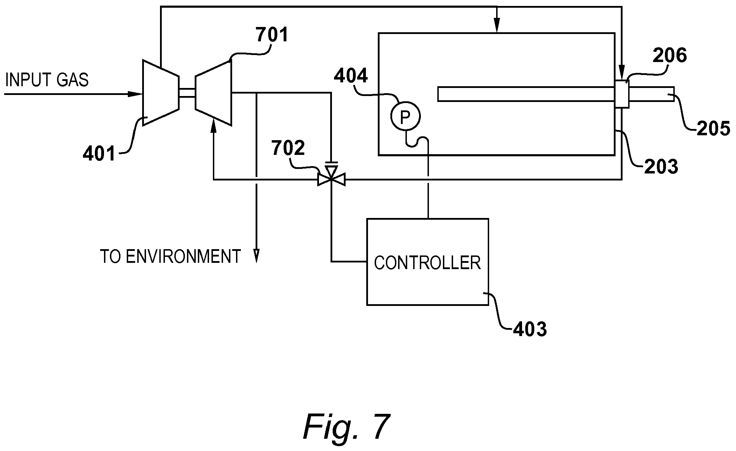

An implementation of the electric machine of Figure 6, is shown in Figure 7.

Those skilled in the art will appreciate the similarities between the arrangement shown in the Figure and a turbocharger. In this regard therefore, the pressurisation system 201 comprises compressor 401, but now driven by a turbine 701 via a suitable interconnecting shaft. As described previously, the compressor 401 may be of various types, and indeed in this example the turbine 701 as well may be centrifugal or axial, single- or multi-stage or any combination thereof.

As in the previously-described embodiments, the compressor 401 is configured to pressurise gas which is then delivered to the casing 203 and the inlet of the seal 206. An inlet of the turbine 701 is connected with the outlet of the seal 206. Gas from the outlet of the seal 206 therefore drives the turbine 701, which in turn drives the compressor 401. As there is no further requirement for the gas exiting the seal 206, the turbine is at liberty to extract as much energy as possible from the air.

It will be appreciated by those skilled in the art that the use of a turbine to drive the compressor is more efficient than simply dumping the gas from the outlet of the seal 206 into the inlet of the compressor 401. This is because the gas from the seal 206 has been heated and so pressurising it requires more energy than would be required for cold input gas.

In order to maintain the pressure in the casing, a relief valve 702 is provided to allow excess gas from the seal 206 to be vented to atmosphere. The relief valve 702 operates under the control of controller 403, which in this embodiment is configured to respond to a reading of the pressure in the casing 203 from pressure sensor 404 therein, as in the previously-described embodiments. The controller 403 is configured to open the relief valve 702 when the pressure in the casing 203 rises above a threshold, and to close it when the pressure drops below the threshold. In this way, the turbine is slowed down or speeded up, disabling or enabling the compressor.

Should the amount of energy in the gas vented from the seal 206 be insufficient to drive the turbine 701, a turbocompounding approach may be adopted by using, for example, an electric motor to supplement the turbine. In a further alternative implementation, the relief valve 702 may be omitted with an electric machine being used in a motor mode of operation to supplement the turbine when the gas supply from the seal 206 is not sufficient, and in a generator mode of operation to harvest electrical energy to a battery when the gas supply from the seal exceeds the amount required to pressurise the casing 203.

Again, it will be appreciated that the associated electronic and electrical equipment outside of the casing 203 may not be operating at the voltage levels encountered within which are much more likely to result in voltage breakdown. As previously described, however, it will be understood that said equipment could, in an alternative embodiment, be itself subjected to pressurisation should electrical breakdown be possible due to its specification and operating environment.

It should also be noted that the pressurisation of the casing 203 may also assist significantly in improving the cooling of the electrical and electromechanical components therein. This is because as air's pressure decreases, the less effective it is at removing heat from surrounding components. By raising the pressure within the casing, there is more gas therein and hence higher total heat capacity. Thus, current derating may not need to be performed at low pressures.

Various examples have been described, each of which feature various combinations of features. It will be appreciated by those skilled in the art that, except where clearly mutually exclusive, any of the features may be employed separately or in combination with any other features and the invention extends to and includes all combinations and sub-combinations of one or more features described herein.

## Claims

1. A propulsor for an aircraft, comprising:
a propulsive fan;
an electric machine configured to drive the propulsive fan, the electric machine having a casing containing electrical and electromechanical components, a shaft which extends outside of the casing and which is connected to the propulsive fan, and a seal to seal the casing around the shaft; and
a pressurisation system configured to pressurise the casing above an external pressure to prevent electrical breakdown within gas in the casing of the electric machine.

2. The propulsor of claim 1, configured as one of:
a ducted fan;
a propfan.

3. The propulsor of claim any preceding claim, in which the diameter of the fan is one of:
at least 1 metre;
at least 2 metres.

4. The propulsor of claim any preceding claim, in which the propulsive fan has, during use, a maximum tip pressure ratio of one of:
at most 1.5;
at most 1.3.

5. The propulsor of claim any preceding claim, in which the propulsive fan has, during use, a maximum tip speed of less than 343 metres per second.

6. The propulsor of claim any preceding claim, in which the pressure in the casing is maintained at 100 kilopascals.

7. The propulsor of any preceding claim, in which the gas in the casing is one or more of:
air;
nitrogen;
sulphur hexaflouride.

8. The propulsor of any preceding claim, in which the seal comprises one of:
a labyrinth seal;.
a dry gas seal.

9. The propulsor of any preceding claim, in which the pressurisation system comprises a compressor configured to increase the pressure of a supply of gas, and optionally the compressor is a driven by a turbine, and optionally an inlet of the turbine is connected with an outlet of the dry gas seal to receive pressurised gas therefrom to drive the turbine.

10. The propulsor of claim 9, in which the compressor is driven electrically.

11. The propulsor of claim 9, in which the compressor is geared to the shaft of the electric machine, optionally magnetically geared to the shaft of the electric machine.

12. The propulsor of any one of claims 9 to 11, in which the pressurisation system comprises:
a pressure sensor configured to output an indication of the gas pressure within the casing; and
a controller configured control the pressurisation of the casing in response to the output of the pressure sensor.

13. The propulsor of claim 12, in which the controller is configured to:
determine that the pressure within the casing has dropped below a threshold, and allow the compressor to pressurise the casing;
determine that the pressure within the casing has risen above the threshold, and prevent the compressor from pressurising the casing.

14. The propulsor of claim 12, in which the controller is configured to vary the speed of the compressor to maintain the pressure within the casing at a constant pressure above the external gas pressure.

15. An aircraft including the propulsor according to claim 1.
